# EUROPEAN PATENT APPLICATION

(11) **EP 4 714 636 A1**
(43) Date of publication of application: **25.03.2026**
(21) Application number: 24382992.6
(22) Date of filing: 18.09.2024
(51) Int. Cl.: B29C 64/106, B29C 64/209, B33Y 30/00, B28B 1/00

(54) **FLUID INK DIRECT EXTRUSION SYSTEM FOR 3D PRINTERS**

(71) Applicant: Fundació Centre CIM, 08028 Barcelona (ES); Universitat politècnica de Catalunya (UPC), 08034 Barcelona (ES)
(72) Inventor: CABRERA MARRERO, José María, 08028 Barcelona (ES); GRANDE MOLINA, Miguel, 08028 Barcelona (ES); CALVO DUARTE, Laura, 08028 Barcelona (ES); POUDELET, Louison, 08028 Barcelona (ES); CARDONA COMA, Roger, 08028 Barcelona (ES)
(74) Representative: Isern Patentes y Marcas S.L.

(57) **Abstract**

The present invention relates to a fluid ink extrusion system for 3D printers comprising an extrusion head (1), with a syringe body (2) arranged to house fluid ink (I) and which is closed in one end by a plunger (3) while the other end conforms an extrusion nozzle (4); also comprising a second bistable hydraulic cylinder actuator (5); a first bistable hydraulic cylinder actuator (6) including a first cylinder barrel (7), a first piston (8) and a first piston rod (9) connected to the plunger (3) of the extrusion head (1); and a hydraulic hose (12); arranged so that when hydraulic fluid (F) flows into a primary chamber (10) of the hydraulic cylinder actuator (6) it pushes the first piston (8) extending the first piston rod (9) and plunger (3), so that the plunger (3) extrudes fluid ink (I) through the extrusion nozzle (4).

## Description

### TECHNICAL FIELD

The present invention belongs to the technical field of additive manufacturing. More specifically, the invention refers to a fluid ink direct extrusion system for 3D printers which is capable of precisely controlling the volume of ink extruded throughout a 3D printing operation.

Throughout this description it should be understood that a direct extrusion system refers to an advanced method in 3D printing designed to deposit fluid materials directly onto a printing platform, without requiring intermediate processes that physically modify the material before deposition. This system operates at ambient temperatures and is equipped with hydraulic actuators and pneumatic valves. These components are crucial for precisely controlling the amount and force of the extruded material, allowing fine adjustments in the pressure and volume of the deposited material, which is essential for the effective manipulation of high-viscosity and density materials. Moreover, the system according to the present invention can provide an extrusion force of approximately 0,8-1 KN which allows the extrusion of high-density / viscosity Inks, comprising -for example- ceramic materials and/or metal particles with a polymeric binder.

### BACKGROUND OF THE INVENTION

### 3D printing has gained popularity in recent years.

This technology, which is also known as additive manufacturing (AM), involves forming three dimensional (3D) objects by deposition of successive layers of molten or fluid materials using 3D images as models, usually Computer Aided Design (CAD) files.

To that end, the 3D image model is firstly divided up into layers by a processing unit. Subsequently, a control unit displaces one or more nozzles -from which the molten or fluid materials comes out- across a platform, to draw out the shape of each layer of the 3D image model. Thus, the object is built by printing the required shape, layer by layer.

Robocasting, also known as Direct Ink Writing (DIW), is an additive manufacturing technique in which the filament used is of a paste-like material -also known as ink- and which is for example, a ceramic slurry, is extruded through a nozzle. The difference with other additive manufacturing techniques is that, in robocasting the material is fluid at ambient temperatures and exits the nozzle in a liquid-like state, but retains its shape exploiting the rheological property of shear thinning. This is not the case in other additive manufacturing techniques, such as fused deposition modeling, in which a thermal cycle including two changes of state (solid to liquid and liquid to solid) are required to realize the consolidation of the construct (i.e., the product which is being manufactured).

Most of prior art extrusion systems employed in robocasting, have extrusion heads with a syringe like shape, which include a cylindrical hollow body (or syringe body), closed in one of its ends by a plunger, while the other end is open and conforms the extrusion nozzle. In this type of extrusion systems, the ink is loaded into the syringe body prior to its installation in the 3D printer and therefore, the ink housed inside the syringe body is the one that will be used for printing.

Two main solutions prevail in the state of the art, to perform the extrusion:
a) the plunger is solidly joined to a movable piston which is, in turn, operated by a coaxial motor, so that when the motor is turned on, it displaces the piston and consequently plunger, in such a way that the plunger pushes the fluid ink, located inside the syringe body, until the fluid ink is expelled through the extrusion nozzle, or alternatively
b) the syringe is connected to compressed air through an electro-valve which, when activated, puts compressed air in contact with the plunger triggering the extrusion of the ink.

One of the problems associated with said type a) prior art extrusion systems is that some fluid inks employed in this type of 3D printing, such as ceramic materials and polymers with metal particles, usually require a considerably high extrusion force, in the range of 0,8-1 kN. And the greater the force employed to push the syringe plunger is, the larger the Power unit (motor +mechanical transmission) should be. This is a shortcoming because the movement of the plunger takes place inside the extrusion head, so a heavy motor would considerably increase the inertia of the extrusion head, requiring a stiffer 3D printer.

In the case of type b) extrusion systems, which use pressurized air, the extrusion pressure is limited by the maximum air pressure available and, in case of availability of high air pressures, this creates an explosion risk.

Another disadvantage of these type b) prior art systems is that they are unable to volumetrically control the volume of fluid ink which is actually extruded through the nozzle, during the 3D printing operation.

### BRIEF EXPLANATION OF THE INVENTION

In order to address the above mentioned problems and shortcomings, an object of the present invention is a fluid ink direct extrusion system for 3D printers comprising an extrusion head, provided with a syringe body arranged to house fluid ink during an extrusion operation, the syringe body being closed in one of its ends by a plunger, while the other end is open and conforms an extrusion nozzle;
characterized in that the system also comprises:
   - a first bistable hydraulic cylinder actuator, provided with a first cylinder barrel which houses a first movable piston and a first piston rod, the first piston dividing the inside space of the first cylinder barrel into a primary chamber and a secondary chamber, the first piston rod being joined by a first end to the first piston and being solidly connected by a second end to the plunger of the extrusion head;
   - a second bistable hydraulic cylinder actuator, provided with a second cylinder barrel which houses a second movable piston and a second piston rod, the second piston dividing the inside space of the second cylinder barrel into a primary chamber and a secondary chamber;
   - an electrical actuator mechanically connected to the second piston rod;
   - a hydraulic hose connecting the primary chambers of the first cylinder barrel and the second cylinder barrel forming a hydraulic circuit;
   - a hydraulic valve arranged for filling the hydraulic circuit with hydraulic fluid and for purging thereof;
   - a pneumatic electro-valve connected, at least to a first pneumatic assistance port provided in the secondary chamber of the first cylinder barrel, the pneumatic electro-valve being arranged for introducing and extracting compressed air into and from the secondary chamber of the first cylinder;
and wherein the electrical actuator is arranged for, in case of absence of compressed air in the secondary chamber of the first cylinder barrel, pushing the second piston rod thereby making the hydraulic fluid flow out of the primary chamber of the second cylinder barrel and entering into the primary chamber of the first cylinder barrel, so that said hydraulic fluid pushes the first piston rod out of the first cylinder barrel and, consequently, displaces the plunger, so that the plunger pushes the fluid ink, extruding it through the extrusion nozzle.

Thanks to the fluid ink extrusion system for 3D printers according to the present invention described above, it is possible to precisely control the volume of ink which is extruded through the nozzle. Moreover, said system is able to provide high extrusion forces in the range of 800N-1kN, which allows the extrusion of multiple fluid inks, including those based in high-density pastes, such as ceramic materials and polymers with metal particles.

The retraction of the first piston is carried out by reversing the movement of the electrical actuator and operating the pneumatic electro-valve so that it introduces in the secondary chamber of the first cylinder barrel. Thus, when the pneumatic electro-valve introduces compressed air through the first pneumatic assistance port, this pressurized air enters inside the secondary chamber of the first cylinder barrel pushing the piston backwards and retracting the first piston rod, (that is, displacing it towards the inside of the first cylinder barrel). Conversely, no additional force is experienced by the first piston when air is extracted through the first pneumatic assistance port.

Moreover, the pneumatic electro-valve is also preferably connected to a second pneumatic assistance port provided in the secondary chamber of the second cylinder barrel, the pneumatic electro-valve being arranged for introducing and extracting compressed air into and from the secondary chamber of the second cylinder barrel.

Consequently, when the pneumatic electro-valve introduces compressed air through the second pneumatic assistance port, this pressurized air enters inside the secondary chamber of the second cylinder barrel pushing the second piston forwards and therefore assisting in pumping the hydraulic fluid out of the primary chamber of the second cylinder barrel. Conversely, no additional force is experienced by the second piston when compressed air is extracted through the second pneumatic assistance port.

The fluid ink extrusion system of the present invention is preferably further provided with:
- an electronic control unit, comprising an electronic control board connected to an electric motor of electric actuator;
- a pneumatic assistance electronic module, provided with a sensing probe input connected to an internal test point of the electronic control board; and
- a relay; connected to a motor movement output of the electronic control board and to a motor direction output of the pneumatic assistance electronic module.

In a preferred embodiment of the invention, compatible with all other embodiments therefore, the second end of the first piston rod of the hydraulic cylinder actuator is solidly connected to an extension piece which is, in turn, solidly joined to the plunger. Alternatively, the second end of the first piston rod of the hydraulic cylinder actuator could also be directly joined to the plunger.

### DESCRIPTION OF THE DRAWINGS

The above and other advantages and characteristics of the invention will be further understood from the following detailed description of some exemplary embodiments thereof, with reference to the attached drawings, which should be considered by way of illustration and not limitation, in which:
Fig. 1 shows a schematic representation an embodiment of the fluid ink extrusion system of the present invention;
Fig. 2 is a cross section view of the extrusion head visible in Fig. 1; and
Fig. 3 is a schematic diagram of an electronic control unit of the fluid ink extrusion system Fig. 1.

### LIST OF REFERENCES

- 1: Extrusion head;
- 2: Syringe body;
- 3: Plunger;
- 4: Extrusion nozzle;
- 5: Second hydraulic bistable cylinder actuator;
- 6: First hydraulic bistable cylinder actuator;
- 7: 1^{st} cylinder barrel;
- 8: 1^{st} movable piston;
- 9: 1^{st} piston rod;
- 10: Primary chamber (of the 1^{st} cylinder barrel);
- 10': Secondary chamber (of the 1^{st} cylinder barrel);
- 11: 1^{st} inlet-outlet port;
- 12: Hydraulic hose;
- 13: Hydraulic valve;
- 14: Extension piece;
- 15: 1^{st} pneumatic assistance port;
- 16: 2^{nd} cylinder barrel;
- 17: 2^{nd} movable piston;
- 18: 2^{nd} piston rod;
- 19: Primary chamber (of the 2^{nd} cylinder barrel);
- 19': Secondary chamber (of the 2^{nd} cylinder barrel);
- 20: 2^{nd} inlet-outlet port;
- 21: Electric actuator;
- 22: 2^{nd} pneumatic assistance port;
- 23: Syringe tip;
- 24: Syringe shirt;
- 25: Syringe holder;
- 26: Main body;
- 27: Electronic control board;
- 28: Internal test point (of the control board);
- 29: Motor movement output;
- 30: First motor driver output;

- 31: Second motor driver output;
- 32: Third motor driver output;
- 33: Fourth motor driver output;
- 34: Electric actuator motor;
- 35: Pneumatic assistance electronic module;
- 36: Relay;
- 37: Pneumatic circuit;
- 38: Sensing probe input;
- 39: Motor direction output;
- F: Hydraulic fluid;
- I: Fluid ink;
- V: Operation voltage.

### DETAILED DESCRIPTION OF THE INVENTION

Embodiments of the invention, illustrated in the figures listed above, will be described in detail below.

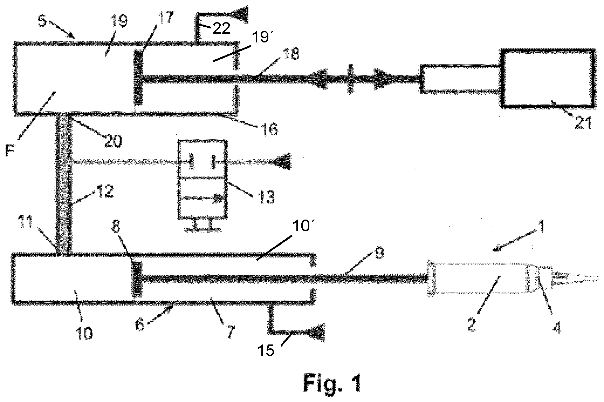

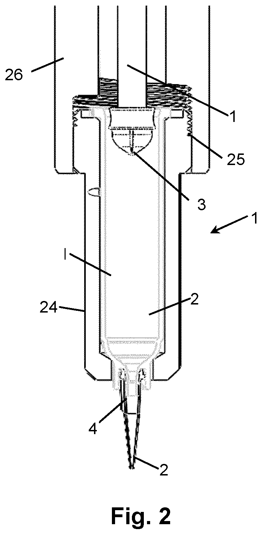

Figure 1 schematically shows one possible embodiment of the fluid ink direct extrusion system of the present invention, which comprises an extrusion head 1, provided with a syringe body 2 arranged to house fluid ink I during an extrusion operation. The syringe body 2 is closed in one of its ends by a plunger 3 (visible in Fig. 2), while the other end is open and conforms an extrusion nozzle 4.

The extrusion system also comprises a first bistable hydraulic cylinder actuator 6 which is provided, in turn, with a first cylinder barrel 7, inside which a first movable piston 8 and a first piston rod 9 are housed. The first piston 8 divides the inside space of the first cylinder barrel 7 into a primary chamber 10, to which a hydraulic fluid F accesses through a first inlet-outlet port 11 and a secondary chamber 10'. The hydraulic fluid F is, in this particular embodiment of the invention, oil.

The first piston rod 9 has two different ends: a first end, which is attached to the first piston 8 and second end, which is solidly connected by end to the plunger 3 of the extrusion head 1. In this particular embodiment, the second end of the first piston rod 9 is not directly connected to the plunger 3. In fact, an intermediate extension piece 14 (shown in Fig. 2) is interposed between the first piston rod 9 and the plunger 3.

Thanks to this arrangement, when the hydraulic fluid F flows into the first chamber 10 through the first inlet-outlet port 11, said hydraulic fluid F pushes the first piston 8 extending the first piston rod 9 out of the first cylinder barrel 7. This forward movement is transmitted to the plunger 3 by means of the extension piece 14, causing the plunger 3 to push the fluid ink I. Because of this increased pressure, the fluid ink I is extruded through the extrusion nozzle 4.

The first hydraulic cylinder actuator 6 is also provided, in this embodiment of the invention, with a first pneumatic assistance port 15 provided in the secondary chamber 10' of the first cylinder barrel 7 and connected to a pneumatic electro-valve, arranged for introducing and extracting compressed air into and from the secondary chamber 10' of the first cylinder barrel 7. Thus, when compressed air is introduced through the first pneumatic assistance port 15 into the secondary chamber 10' of the first cylinder barrel 7, pressurized air pushes the piston 8 backwards retracting the first piston rod 9 towards the inside of the first cylinder barrel 7. Conversely, no additional force is experimented by the first piston 8 when compressed air is extracted from the secondary chamber 10' through the first pneumatic assistance port 15, a condition required during the extrusion or stationary phases of the extrusion system.

The extrusion system also comprises a second bistable hydraulic cylinder actuator 5, provided with a second cylinder barrel 16 which houses a second movable piston 17 and a second piston rod 18, the second piston 17 dividing the inside space of the second cylinder barrel 16 into a primary chamber 19 intended to house hydraulic fluid F and a secondary chamber 19'.

In this embodiment of the invention, the second piston rod 18 is operated by means of an electric actuator 21, to which it is mechanically connected. Thus, when the electric actuator 21 pushes the second piston rod 18 towards the inside of the second cylinder barrel 16, the second piston 17 pushes the hydraulic fluid F which is inside the second chamber 19, pumping it out through a second inlet-outlet port 20.

The second bistable hydraulic cylinder actuator 5 is also provided, in this embodiment of the invention, with a second pneumatic assistance port 22, connected to the interior of the second cylinder barrel 16 and located in the secondary chamber 19' of the second cylinder barrel 16. The second pneumatic assistance port 22 is also connected to the pneumatic electro-valve, which is arranged for introducing and extracting compressed air into and from the secondary chamber 19'. Thus, when compressed air is introduced through the second pneumatic assistance port 22, this pressurized air enters inside the second cylinder barrel 16 pushing the second piston 17 and therefore assisting in pumping the hydraulic fluid F out of the primary chamber 19 of the second cylinder barrel 16, during the extrusion phase. Conversely, no additional force is experimented by the second piston 17 when compressed air is extracted from the secondary chamber 19' through the second pneumatic assistance port 22, a condition required during the retraction or stationary phases of the extrusion system.

The extrusion system circuit also comprises a hydraulic hose 12 which is disposed between the second bistable hydraulic cylinder actuator 5 and the first bistable hydraulic cylinder actuator 6 and allows the flow of hydraulic fluid F between both elements. Finally, the hydraulic circuit is also provided with a hydraulic valve 13, arranged for filling the hydraulic circuit with hydraulic fluid F and for purging thereof.

Fig. 2 shows a cross section of the extrusion head 1 visible in Fig. 1. As already anticipated, the syringe body 2 arranged to house fluid ink is closed in one of its ends by a plunger 3 while the other end is open and conforms an extrusion nozzle 4.

In this embodiment of the invention, the extrusion nozzle 4 is provided with a syringe tip 23, while the syringe body 2 is surrounded by a syringe shirt 24, which acts as protective cover and as adapter for the syringe. The arrangement formed by the syringe shirt 24 and the syringe body 2, is joined to the main body 26 of the extrusion system, by means of a syringe holder 25.

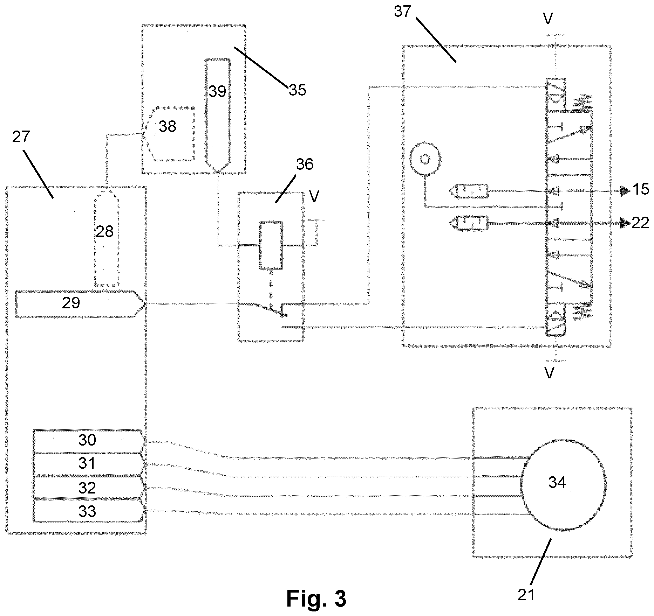

Fig. 3 is a schematic diagram of an electronic control unit of the fluid ink extrusion system Fig. 1. In this embodiment, the electronic control unit comprises an electronic control board 27, namely a Duet 3D (commercial name) control board, which is directly connected (through four different driver outputs 30, 31, 32, and 33) to an electric motor 34 of the electric actuator 21. In addition, to properly control the pneumatic circuit 37 (to which the 1^{st} pneumatic assistance port 15 and the 2^{nd} pneumatic assistance port 22 are connected), a pneumatic assistance electronic module 35 is also provided.

This pneumatic assistance electronic module 35 comprises a sensing probe input 38, which is connected to an internal test point 28 of the electronic control board 27 and a motor direction output 39 connected, in turn, to a relay 36. The relay 36 is also connected to a motor movement output 29 of the electronic control board 27.

Both the relay 36 and the pneumatic circuit 37, work at the operation voltage V of the system which is, in this, case 24volts.

## Claims

1. A fluid ink direct extrusion system for 3D printers comprising an extrusion head (1), provided with a syringe body (2) arranged to house fluid ink (I) during an extrusion operation, the syringe body (2) being closed in one of its ends by a plunger (3), while the other end is open and conforms an extrusion nozzle (4);
**characterized in that** the system also comprises:
- a first bistable hydraulic cylinder actuator (6), provided with a first cylinder barrel (7) which houses a first movable piston (8) and a first piston rod (9), the first piston (8) dividing the inside space of the first cylinder barrel (7) into a primary chamber (10) and a secondary chamber (10'), the first piston rod (9) being joined by a first end to the first piston (8) and being solidly connected by a second end to the plunger (3) of the extrusion head (1);
- a second bistable hydraulic cylinder actuator (5), provided with a second cylinder barrel (16) which houses a second movable piston (17) and a second piston rod (18), the second piston (17) dividing the inside space of the second cylinder barrel (16) into a primary chamber (19) and a secondary chamber (19');
- an electrical actuator (21) mechanically connected to the second piston rod (18);
- a hydraulic hose (12), connecting the primary chamber (10) of the first cylinder barrel (7) and the primary chamber (19) of the second cylinder barrel (16) forming a hydraulic circuit;
- a hydraulic valve (13) arranged for filling the hydraulic circuit with hydraulic fluid (F) and for purging thereof;
- a pneumatic electro-valve connected, at least to a first pneumatic assistance port (15) provided in the secondary chamber (10') of the first cylinder barrel (7), the pneumatic electro-valve being arranged for introducing and extracting compressed air into and from the secondary chamber (10') of the first cylinder barrel (7);
wherein the electrical actuator (21) is arranged for, in case of absence of compressed air in the secondary chamber (10') of the first cylinder barrel (7), pushing the second piston rod (18) thereby making the hydraulic fluid (F) flow out of the primary chamber (19) of the second cylinder barrel (16) and entering into the primary chamber (10) of the first cylinder barrel (6), so that the hydraulic fluid (F) pushes the first piston rod (9) out of the first cylinder barrel (7) and, consequently, displacing the plunger (3), so that the plunger (3) pushes the fluid ink (I), extruding it through the extrusion nozzle (4).

2. The extrusion system according to any of the preceding claims, wherein second end of the first piston rod (9) of the hydraulic cylinder actuator (6) is solidly connected to an extension piece (14), the extension piece (14) being, in turn, solidly joined to the plunger (3).

3. The extrusion system according to any of the preceding claims, wherein the pneumatic electro-valve is also connected to a second pneumatic assistance port (20) provided in the secondary chamber (19') of the second cylinder barrel (16), the pneumatic electro-valve being arranged for introducing and extracting compressed air into and from the secondary chamber (19') of the second cylinder barrel (16).

4. The extrusion system according to any of the preceding claims, further comprising:
- an electronic control unit comprising an electronic control board (27), connected to an electric motor (34) of the pump actuator (21);
- a pneumatic assistance electronic module (35), provided with a sensing probe input (38) connected to an internal test point (28) of the electronic control board (27); and
- a relay (36); connected to a motor movement output (29) of the electronic control board (27) and to a motor direction output (39) of the pneumatic assistance electronic module (35).
